# FASCICULE DE BREVET EUROPEEN

(11) **EP 1 568 903 B1**
(45) Date de publication et mention de la délivrance du brevet: **01.10.2008**
(21) Numéro de dépôt: 05101431.4
(22) Date de dépôt: 24.02.2005
(51) Int. Cl.: F16C 11/06

(54) **Ensemble comportant un organe de liaison et un amortisseur en matériau élastomère**
Anordnung mit einem Verbindungsglied und einem Dämpfer aus einem Elastomermaterial
Arrangement comprising a connecting part and a damper of elastomeric material

(30) Priorité: 25.02.2004 FR 0401867
(43) Date de publication de la demande: 31.08.2005
(73) Titulaire: SNECMA, 75015 Paris (FR); Delmon Industrie, 75116 Paris (FR)
(72) Inventeur: Mahy, Frédéric, 77950 Maincy (FR); Etoile, Gérard, 77140, Nemours (FR); Cortesi, Pierre, 91250 Saint Germain les Corbeil (FR); Delmon, Pierre, 19100 Brive La Gaillarde (FR); Mas, Jean, 24120 Terrasson Lavilledieu (FR)
(74) Mandataire: David, Daniel

(56) Documents cités:
- EP-A- 1 302 680
- US-A- 3 831 888
- US-A- 4 139 245
- US-A- 4 475 610
- US-A- 5 979 592

## Description

La présente invention concerne un ensemble comportant un élément amortisseur et un organe de liaison, tel qu'une biellette, pourvu d'une tête plate, montée par l'intermédiaire d'une rotule sur un axe solidaire d'une chape femelle. La fonction de l'élément est d'amortir les vibrations entre la tête et la chape. L'invention vise en particulier une biellette de suspension d'un module tel que le boîtier renfermant les engrenages pour l'entraînement des machines accessoires sur un moteur à turbine à gaz appliqué au domaine aéronautique.

Un moteur à turbine à gaz utilisé pour la propulsion des aéronefs, un turboréacteur notamment, comprend des machines auxiliaires nécessaires à son fonctionnement. Il s'agit par exemple de pompes de fluides pour actionner des organes de commande, de lubrification ou de carburant ainsi que de générateurs électriques. Ces machines sont montées en prise mécanique avec un boîtier d'engrenages qui est lui-même relié à un arbre du moteur par une liaison mécanique appropriée. Ce boîtier est communément désigné par son sigle, AGB pour « Accessory Gear Box », dans le domaine. Le boîtier d'engrenages est maintenu en suspension sur le carter du moteur un peu en aval de l'étage de la soufflante par des organes de liaison qui se présentent sous la forme de biellettes.

Une biellette comprend une tige terminée à ses deux extrémités par une tête de forme plate, avec deux faces parallèles, dans l'alésage duquel une cage cylindrique extérieurement est maintenue par sertissage. La surface interne de la cage sert de guide à une douille à surface extérieurs sphérique formant une rotule. Un tissu autolubrifiant est collé à l'intérieur de la cage et reste en contact avec la surface sphérique de la rotule pour permettre les mouvements relatifs entre eux. Ce tissu permet d'absorber les phénomènes vibratoires par un montage sans jeu avec un couple rotulant.

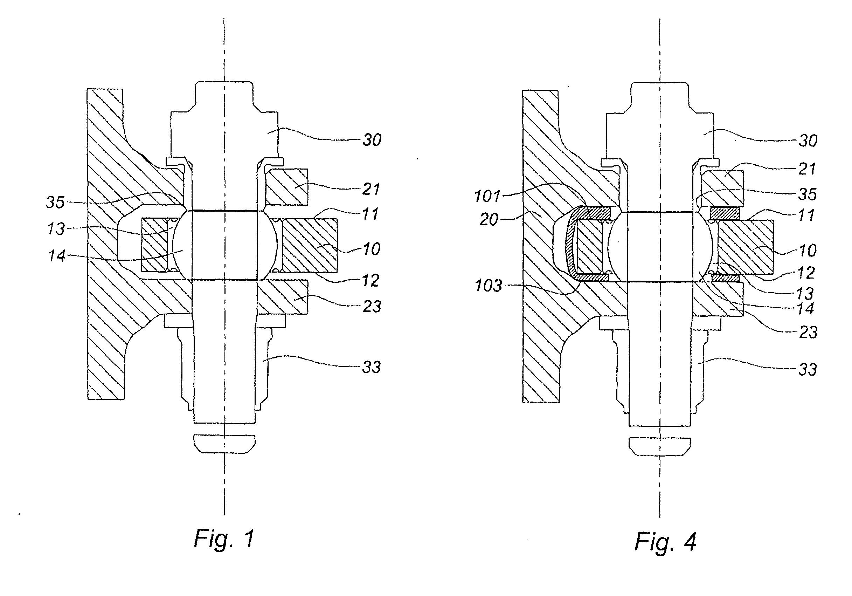

Chaque tête de biellette 10 est montée entre les oreilles 21 et 23 d'une chape femelle 20 comme cela est représenté sur la figure 1. Sur cette figure on ne voit pas toute la biellette, seulement une partie de la tête. La tête comprend deux faces parallèles elles 11 et 12 percées par un alésage pour le logement de la cage 13 avec sa rotule 14. Le tissu autolubrifiant n'est pas représenté. La tête est maintenue entre les deux oreilles de la chape par une vis 30 qui traverse ces dernières et la rotule. La vis est elle-même immobilisée par un écrou 33.

La biellette est immobilisée axialement selon la direction de la vis 30 par la rotule qui comme on le voit sur la figure est en appui d'un côté contre la face interne de l'oreille 23 de la chape et de l'autre contre un épaulement 35 de la vis. Grâce à ce montage avec rotule, la tête de biellette peut pivoter librement autour de l'axe de la vis et autour de tout axe perpendiculaire à celui-ci dans les limites des butées définies par l'environnement. Le mouvement est limité notamment en fonction de l'intervalle, ménagé de part et d'autre, entre la tête de biellette et les oreilles de la chape.

Au cours de la vie du moteur, ce lien est soumis à des micro-déplacements dus à des efforts de vibration, en particulier à des sollicitations orientées parallèlement à l'axe de la vis, en raison notamment de la faible inclinaison des biellettes par rapport au plan horizontal. Ces sollicitations finissent à la longue par user et dégrader le tissu autolubrifiant entre la rotule et la cage. Il s'ensuit un contact et un endommagement des surfaces métalliques qui nécessitent une intervention de réparation.

La présente invention vise la mise au point d'un moyen d'amortissement des vibrations entre la tête de biellette et les oreilles de la chape dans laquelle elle est montée.

Plus généralement l'invention a pour objet un moyen d'amortissement des vibrations entre un organe de liaison monté avec rotule entre les deux oreilles d'une chape.

On a proposé de glisser des rondelles en matériau élastomère entre les surfaces en vis à vis de la tête de l'organe de liaison et de la chape. Cependant un tel montage n'est pas aisé car il est difficile de maintenir les rondelles en place avant le montage de la vis tout en garantissant leur centrage. Le technicien dispose de peu de place autour du moteur lorsque la réparation doit être faite sous l'aile de l'avion c'est à dire en dehors de l'atelier. On a, pour résoudre ce problème, proposé de coller les rondelles sur les faces de la tête de l'organe de liaison. Cependant cette solution est apparue ne pas être satisfaisante dans la mesure où l'adhésif s'introduit entre la rotule et la cage entraînant une dégradation de la fonction rotulante.

L'invention a donc pour objectif un moyen d'amortissement de l'organe de liaison qui soit de mise en oeuvre simple et qui augmente notablement la durée de vie de l'ensemble rotulant.

Conformément à l'invention, on réalise un ensemble d'un organe de liaison et d'un amortisseur en matériau élastomère tel que caractérisé par la revendication 1.

L'art antérieur est constitué par les brevets US 4 139 245 qui décrit un ensemble formé par un organe de liaison et un amortisseur en matériau élastomère, ledit organe comprenant une tête avec deux faces parallèles entre elles et traversée par un alésage, une rotule avec sa cage étant logée dans l'alésage, et l'amortisseur comprenant deux éléments sur les deux faces de l'organe et US 3 831 888 qui décrit une biellette montée dans une chape par l'intermédiaire d'un palier à rotule.

Conformément à une autre caractéristique, les disques ont une épaisseur au moins égale à la portion de la rotule en saillie par rapport à une face de la tête. Cette disposition permet d'assurer la mise en compression d'un disque au serrage de la vis dans la chape. En fonctionnement, l'autre disque vient au moins aussi en contact de sa surface adjacente et est mis en compression lorsque l'organe de liaison vient à s'incliner. Ce principe permet un amortissement efficace des vibrations et empêche tout contact entre la tête de l'organe de liaison et les oreilles de la chape.

Conformément à un mode de réalisation, les épaisseurs des deux disques sont identiques.

Conformément à un autre mode de réalisation les deux épaisseurs sont différentes.

De préférence, les dits moyens de liaison sont formés par une pluralité de bras. En particulier pour des têtes de biellette, ils permettent une adaptabilité d'un même amortisseur à plusieurs types de géométrie et de diamètre de celles-ci. Le cas échéant on adapte le nombre et la dimension des bras à la géométrie et au diamètre de l'organe de liaison utilisé. Les disques sont également adaptés à la géométrie et au diamètre de l'organe de liaison. Cette disposition permet un montage aisé de l'amortisseur, les deux disques pouvant être écartés l'un de l'autre aisément et sans effort.

L'invention vise également un procédé pour monter un ensemble tel que décrit par les revendications 1-5. Selon ce procédé la tête de l'organe de liaison étant libre, on glisse l'amortisseur autour de la tête de telle façon que les deux éléments en forme de disque viennent chacun contre une face de la dite tête, on introduit la tête avec l'amortisseur entre les oreilles de la chape et on bloque l'organe de liaison dans la chape avec ledit axe.

Selon un mode de réalisation particulier, l'intervalle entre chaque face et l'oreille adjacente étant différent, l'amortisseur présentant un élément plus épais que l'autre, on place l'élément plus épais entre la face et l'oreille présentant l'intervalle le plus grand.

On décrit maintenant plus en détail l'amortisseur de l'invention en référence aux sur lesquels
La figure 1 représente le d'un organe de liaison sur une conformément à l'art antérieur,
La figure 2 représente en perspective un amortisseur conforme à l'invention,
La figure 3 représente l'amortisseur monté sur une tête de biellette,
La figure 4 représente en coupe axiale le montage de l'amortisseur de l'invention.

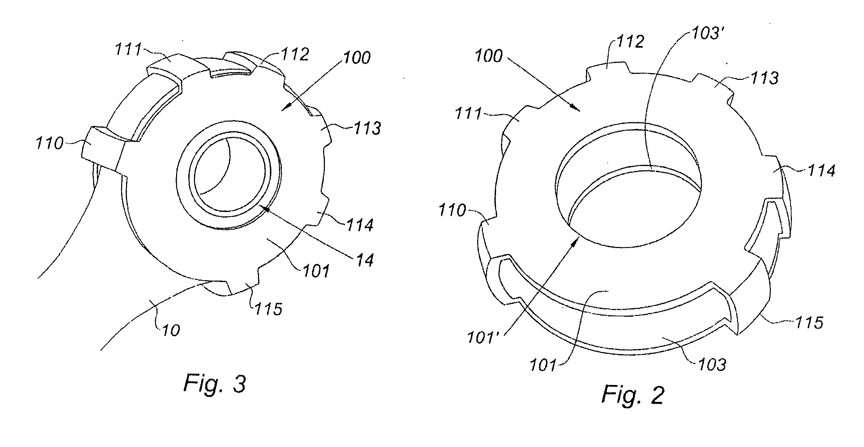

En se reportant à la figure 2, on voit l'amortisseur de l'invention avant mise en place sur la tête de l'organe de liaison. L'amortisseur 100 est composé d'un premier 101 et d'un deuxième 103 éléments en forme de disque. Ces deux éléments 101 et 103 ont une ouverture centrale circulaire, 101' et 103' respectivement. Ils sont reliés l'un à l'autre à leur périphérie par des moyens de liaison axiaux, ici par six bras 110, 111, 112, 113, 114 et 115 qui les maintiennent à une distance déterminée. Les bras sont disposés de façon à permettre la mise en place de l'amortisseur sur la tête de l'organe de liaison. De préférence, les éléments et les moyens de liaison sont venus de moulage dans une même matière. Cette dernière est un élastomère dont la composition chimique est adaptée à la fonction de filtrage des vibrations mais aussi à l'environnement dans lequel il est placé. Par exemple, il peut être nécessaire de prévoir une résistance aux agressions chimiques, aux huiles et au kérosène qu'aux conditions de température auxquelles l'amortisseur est soumis en fonctionnement ou non. Pour l'application à la suspension des boîtiers AGB d'un turboréacteur, un élastomère à base de fluorosilicone convient.

On a représenté, sur la figure 3, l'amortisseur en place sur la tête de l'organe de liaison avant que ce dernier soit monté sur la chape. On a glissé l'amortisseur sur la tête à la manière d'une chaussette selon un sens de montage indiqué. Les éléments 101 et 103 sont appliqués chacun sur une face 11 ou 12 de la tête 10. Les bras 110 à 115 assurent le maintien en place des deux sur la tête. On observe que les orifices 101' et 103' sont suffisamment larges pour ne pas recouvrir les portions de la rotule faisant saillie de part et d'autre de la tête 10. En outre l'épaisseur des éléments 101 et 103 est pour que la rotule 14 ne soit pas saillante par rapport aux plans des éléments 101 et 103.

Sur la figure 4, on retrouve la tête de biellette montée sur la chape comme dans la figure 1 mais cette fois-ci elle est pourvue de l'amortisseur. Par rapport à la figure 3 les deux éléments sont légèrement comprimés entre la face 11 et l'oreille 21 d'une part et la face 12 de la tête 10 et l'oreille 23 d'autre part. On a choisi l'épaisseur de chacun des éléments en fonction de chacun de ces deux jeux.

Par exemple pour une biellette montée sur une chape avec un jeu de 1,7 mm d'un côté, et supérieur à l'épaisseur du disque de l'autre côté, on a choisi deux éléments de même épaisseur de 2 mm.

On a procédé à des tests d'endurance sur des biellettes de suspension arrière de boîtier AGB. On n'a constaté aucun changement dans le comportement mécanique et dynamique de la suspension et donc sur sa capacité d'endurance vibratoire. L'introduction de ces amortisseurs ne modifie pas la définition technique des pièces assurant la tenue structurale de la suspension. Par conséquent la signature vibratoire du moteur reste inchangée.

En revanche la situation vibratoire des biellettes de suspension évolue positivement et significativement ce qui se traduit par une augmentation conséquente de la durée de vie de l'ensemble rotulant.

Des essais partiels comparatifs d'endurance vibratoire entre une biellette A sans amortisseur et une biellette B avec amortisseur ont été conduits pour démontrer l'efficacité de l'amortissement.

Les conditions d'essais étaient les suivantes.

La fixation des biellettes était représentative des fixations sur le moteur: chape, axes, écrous.

On a réalisé deux tranches d'endurance:
- une endurance pendant 5×10⁷ cycles à une fréquence de 2000 Hz avec une accélération de 25g, appliquée dans le sens axial de la rotule,
- une endurance pendant 7,2×10⁷ cycles sur la fréquence propre de la biellette sur le mode 1F (1200Hz) à une accélération de niveau 25g, appliquée dans le sens axial de la rotule.

Les résultats d'essais sont les suivants : pour A on constate un début d'usure de la rotule se traduisant par une perte du couple de rotation dû à la dégradation du tissu autolubrifiant par l'effet des micro-déplacements, et un début de prise de jeu entre la rotule et la cage. Pour B on constate une absence d'évolution du comportement mécanique de la rotule pendant toute l'endurance. Ces résultats montrent que la tenue des biellettes de suspension en endurance vibratoire n'est pas dégradée mais significativement améliorée.

## Revendications

1. Ensemble comportant un organe de liaison, tel qu'une biellette, et un amortisseur en matériau élastomère, ledit organe comprenant une tête (10) avec deux faces (11, 12) parallèles entre elles et traversée par un alésage, une rotule (14) avec sa cage (13) étant logée dans l'alésage, ledit amortisseur comprenant deux éléments sur les deux faces de l'organe de liaison, **caractérisé par le fait que** lesdits deux éléments (101, 103) sont en forme de disque, parallèles entre eux, chacun avec une ouverture centrale suffisamment large pour ne pas recouvrir les portions de la rotule faisant saillie par rapport à la tête et lesdits deux éléments étant reliés à leur périphérie par des moyens de liaison (110, 111, 112, 113, 114, 115).

2. Ensemble selon la revendication précédente dont les éléments (101, 103) en forme de disque ont une épaisseur au moins égale à la portion de la rotule (14) en saillie par rapport à une face de la tête.

3. Ensemble selon l'une des revendications précédentes dont les épaisseurs desdits deux éléments (101, 103) sont identiques.

4. Ensemble selon l'une des revendications 1 et 2 dont les épaisseurs desdits deux éléments (101,103) sont différentes.

5. Ensemble selon l'une des revendications précédentes dont les dits moyens de liaison sont formés par une pluralité de bras (110, 111, 112, 113, 114, 115).

6. Procédé pour monter l'ensemble selon l'une des revendications précédentes, avec un axe (30) entre les oreilles (21, 23) d'une chape femelle (20), selon lequel la tête (10) de l'organe étant libre on glisse l'amortisseur (100) autour de la tête de telle façon que les deux éléments (101, 103) en forme de disque viennent chacun contre une face de la dite tête (10), on introduit la tête avec l'amortisseur (100) entre les oreilles (21, 23) de la chape et on bloque l'organe de liaison dans la chape (20) avec ledit axe.

7. Procédé selon la revendication précédente, le jeu entre chaque face (11, 12) de la tête (10) et l'oreille adjacente étant différent, l'amortisseur (100) présentant un élément (101, 103) plus épais que l'autre, on place l'élément plus épais entre la face et l'oreille présentant entre eux le jeu le plus grand.

## Claims

1. Device comprising a connection component, such as a connecting rod and an absorber in elastomer material, the said component having a head (10) with two faces (11, 12) parallel to each other and traversed by a bore a ball-joint (14) with its cage (13), being housed in said bore, said absorber comprising two elements on both faces of the connection component, **characterised in that** said two elements (101, 103) are in the form of discs, parallel to each other, each with a central opening sufficiently wide so as not to cover the portions of the ball-joint which protrude in relation to the head and connected at their periphery by means of connection (110, 111, 112, 113, 114, 115).

2. Device according to the preceding claim the elements of which (101, 103) in the form of discs have a thickness at least equal to the portion of the ball-joint (14) which protrudes compared to one face of the head.

3. Device according to one of the preceding claims where the thicknesses of the two elements (101, 103) are the same.

4. Device according to one of claims 1 and 2 where the thicknesses of the said two elements (101, 103) are different.

5. Device according to one of the preceding claims where the said means of connection are formed by a plurality of arms (110, 111, 112, 113, 114, 115).

6. Method for mounting a device according to one of the preceding claims, with a pin (30) between the lugs (21, 23) of a female yoke (20), in accordance with which since the head (10) of the component is free, the absorber (100) is slid around the head in such a manner that the two elements (101, 103) in the form of discs each come up against one face of the said head (10), the head with the absorber (100) is inserted between the lugs (21, 23) of the yoke and the connecting component is locked in the yoke (20) using the said pin.

7. Method according to the preceding claim, since the play between each face (11,12) of the head (10) and the adjacent lug is different, since the absorber (100) has one element (101, 103) thicker than the other, one places the thicker element between the face and the lug which has the largest play there between.

## Patentansprüche

1. Vorrichtung, bestehend aus einem Verbindungsorgan wie beispielsweise einem Schwingarm und einem Stoßdämpfer aus einem Elastomer, wobei dieses Organ einen Kopf (10) mit zwei parallel zueinander liegenden Seiten (11, 12) aufweist, durch die eine Bohrung verläuft, wobei ein Kugelgelenk (14) mit seinem Käfig (13) in der Bohrung sitzt, wobei dieser Stoßdämpfer zwei Elemente auf den beiden Seiten des Verbindungsorgans aufweist,
**dadurch gekennzeichnet,**
**dass** diese beiden Elemente (101, 103) in Form von Scheiben ausgeführt sind, die parallel zueinander liegen, jede mit einer zentralen Öffnung, die ausreichend groß ist, dass sie die von dem Kopf hervorstehenden Abschnitte des Kugelgelenks nicht aufnehmen, und wobei diese beiden Elemente an ihrer Umfangslinie durch Verbindungsmittel (110, 111, 112, 113, 114, 115) miteinander verbunden sind.

2. Vorrichtung nach dem vorherigen Anspruch, deren Elemente (101, 103) in Scheibenform eine Dicke haben, die mindestens gleich groß ist wie der von dem Kopf hervorstehende Abschnitt des Kugelgelenk (14).

3. Vorrichtung nach einem der vorherigen Ansprüche, bei der die Dicken dieser beiden Elemente (101, 103) identisch sind.

4. Vorrichtung nach einem der Ansprüche 1 und 2, bei der die Dicken dieser beiden Elemente (101, 103) verschieden sind.

5. Vorrichtung nach einem der vorherigen Ansprüche, bei der diese Verbindungsmittel von einer Vielzahl von Stegen (110, 111, 112, 113, 114, 115) gebildet werden.

6. Verfahren zur Montage der Vorrichtung nach einem der vorherigen Ansprüche mit einer Achse (30) zwischen den Schenkeln (21, 23) einer Aufnahmegabel (20), wobei bei freiem Kopf (10) des Organs der Stoßdämpfer (100) dergestalt um den Kopf herum aufgeschoben wird, dass die beiden Elemente (101, 103) in Scheibenform sich jeweils an eine Seite dieses Kopfs (10) anlegen, sodann der Kopf mit dem Stoßdämpfer (100) zwischen die Schenkel (21, 23) der Gabel eingeführt wird und das Verbindungsorgan in der Gabel (20) mit dieser Achse blockiert wird.

7. Verfahren nach dem vorherigen Anspruch, wobei das Spiel zwischen jeder Seite (11, 12) des Kopfs (10) und dem angrenzenden Schenkel verschieden ist, wobei der Stoßdämpfer (100) ein Element (101, 103) aufweist, das dicker ist als das andere, wobei das dickere Element zwischen der Seite und dem Schenkel angeordnet wird, die zwischen sich das größere Spiel aufweisen.
